(19) **Europäisches Patentamt / European Patent Office / Office européen des brevets**

(11) **EP 2 120 582 B1**

(12) **EUROPEAN PATENT SPECIFICATION**

(45) Date of publication and mention
of the grant of the patent:
**16.02.2011 Bulletin 2011/07**

(51) Int Cl.:
***A01N 47/22*** *(2006.01)*     ***A01P 13/02*** *(2006.01)*

(21) Application number: **07848629.7**

(86) International application number:
**PCT/GB2007/004900**

(22) Date of filing: **20.12.2007**

(87) International publication number:
**WO 2008/075054 (26.06.2008 Gazette 2008/26)**

(54) **HERBICIDE COMPOSITION**

HERBIZIDZUSAMMENSETZUNG

COMPOSITION D'HERBICIDE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.12.2006 GB 0625591**

(43) Date of publication of application:
**25.11.2009 Bulletin 2009/48**

(73) Proprietor: **Agrovista UK LTD.**
**Stapleford**
**Nottingham**
**Nottinghamshire NG9 8AB (GB)**

(72) Inventors:
• **Lockett, John**
**Stapleford**
**Nottinghamshire NG9 8AB (GB)**

• **Morgan, Craig**
**Stapleford**
**Nottinghamshire NG9 8AB (GB)**

(74) Representative: **Elsy, David**
**Withers & Rogers LLP**
**Goldings House**
**2 Hays Lane**
**London SE1 2HW (GB)**

(56) References cited:
**WO-A-01/35742**     **WO-A-95/03697**

• **STREIBIG J C ET AL: "THE EFFECT OF FORMULATIONS ON THE HERBICIDAL ACTIVITY OF PHENMEDIPHAM" INTERNATIONAL SYMPOSIUM ON ADJUVANTS FOR AGROCHEMICALS, XX, XX, vol. 1, 1989, pages 83-92, XP009096969**

**Description**

The present invention relates to a new approach to the protection of oilseed rape crops from unwanted weeds using phenmedipham, and to new compositions for this purpose.

The control of unwanted weeds in crops has been an problem in agriculture for many years. Many different herbicides have been used over this time to control and kill the weeds. However, a significant number of these herbicides which are effective are no longer allowed to be used in the fields in the concentrations required due to environmental considerations.

Oilseed rape (*Brassica napus* ssp *oleifera*) is an important crop in the UK and abroad. Oilseed rape acres in the UK are increasing. This increase in crop area has coincided with a decrease in the availability of approved post-emergence herbicides which can be used. As a result of these herbicides no longer being approved for use, there are very few herbicides which are active in the protection of the oilseed rape which are available for use.

There is therefore a need for a herbicide which can be both effective for the control or inhibition of the growth of unwanted weeds in oil seed rape crops, and which is not damaging to the environment.

Phenmedipham (3-((methoxycarbonyl)amino)phenyl (3-methylphenyl)carbamate), and phenmedipham-containing mixtures have been known as herbicides since the 1960s. They were used extensively for the control of unwanted weeds in sugar beet crops, but not for the control of weeds in oil seed rape crops. Other uses indicated in the industry standard text book, "The Pesticide Manual", are protection of strawberries, spinach, peas, mangold and red beet.

Indeed, phenmedipham has been used to kill unwanted oilseed rape from spilled seed. For example, RU 2,263,449 shows oilseed rape used as a weed control in tests of phenmedipham on sugar beet trials. Weeds are usually considered to be plants that grow among crop plants (in this case sugar beet) and compete for space, food, etc.

However, in contrast to its previous use, it has now surprisingly been found that phenmedipham can in fact be effective as a herbicide for the protection of oilseed rape crops while controlling or inhibiting the growth of unwanted weeds, and for killing the weeds.

Therefore, in accordance with the present invention, there is provided a use of, and/or a method of using, a composition comprising phenmedipham as a herbicide in the protection of oilseed rape crops.

The use and method allow oilseed rape to be grown whilst controlling or inhibiting the growth of weeds.

The herbicide is preferably applied to the crop via a farm sprayer using hydraulic nozzles, as it is primarily a contact herbicide by nature.

The oilseed rape crop is preferably winter and spring oilseed rape. The term "oilseed rape" is intended to mean *B. napus oleifera,* and is also known as rape, rapeseed, and rape seed. It includes "canola", which is a genetic variation of the plant.

Phenmedipham is significantly less effective against oilseed rape at lower concentrations. As such, it could be used at these lower concentrations as a herbicide against the weeds which impact upon oilseed rape crops which are affected by phenmedipham at these concentrations, without significantly harming the oilseed rape. If necessary, for weeds which require stronger concentrations in order to be controlled, one or more further herbicides can be combined with the phenmedipham.

The timing of the application of the phenmedipham is an important factor in the protection of the oilseed rape crops. While phenmedipham may be herbicidally effective against oilseed rape at very early stages of growth, once the oilseed rape reaches a certain stage of growth, the phenmedipham is no longer significantly herbicidally effective against it. It is therefore preferred that a composition comprising phenmedipham is applied to the oilseed rape not before the oilseed rape has three to four true leaves beyond the cotyledon stage and an established root system. More preferably, it has at least two fully expanded leaves. This is known as growth stage 1.2 according to the growth stage identification key recognised in the industry and reproduced in the table below. Preferably it is used no later than when the crop canopy closes, as this can prevent the herbicide from hitting its target.

**GROWTH STAGES OF OILSEED RAPE**

| Growth Stage | | |
| --- | --- | --- |
| GERMINATION AND EMERGENCE | 0.0 | Dry seed |
| LEAF PRODUCTION | 1.0 | Both cotyledons unfolded and green |
| 1.1 | | First true leaf emerged |
| 1.2 | | Second true leaf emerged |
| 1.3 | | Third true leaf emerged |

(continued)

| Growth Stage | | |
|---|---|---|
| 1.4 | | Fourth true leaf emerged |
| 1.5 | | Fifth true leaf emerged |
| 1.10 | | About tenth true leaf emerged |
| 1.15 | | About fifteenth true leaf emerged |
| STEM EXTENSION | 2.0 | No internodes (rosette) |
| 2.5 | | About five internodes |
| FLOWERBUD DEVELOPMENT | 3.0 | Only leaf buds present |
| 3.1 | | Flower buds present but enclosed by leaves |
| 3.3 | | Flower buds visible from above ('green bud') |
| 3.5 | | Flower buds raised above leaves |
| 3.6 | | First flower stalks extending |
| 3.7 | | First flower buds yellow ('yellow bud') |
| FLOWERING | 4.0 | First flower opened |
| 4.1 | | 10% all buds opened |
| 4.3 | | 30% all buds opened |
| 4.5 | | 50% all buds opened |
| POD DEVELOPMENT | 5.3 | 30% potential pods |
| 5.5 | | 50% potential pods |
| 5.7 | | 70% potential pods |
| 5.9 | | All potential pods |
| SEED DEVELOPMENT | 6.1 | Seeds expanding |
| 6.2 | | Most seeds translucent but full size |
| 6.3 | | Most seed green |
| 6.4 | | Most seed green-brown mottled |
| 6.5 | | Most seeds brown |
| 6.6 | | Most seed dark brown |
| 6.7 | | Most seed black but soft |
| 6.8 | | Most seed black and hard |
| 6.9 | | All seeds black and hard |
| LEAF SENESCENCE | 7.0 | |
| STEM SENESCENCE | 8.1 | Most stem green |
| 8.5 | | Half stem green |
| 8.9 | | Little stem green |
| POD SENESCENCE | 9.1 | Most pods green |
| 9.5 | | Half pods green |
| 9.9 | | Few pods green |

More preferably, the composition is applied to the oilseed rape at any time from the three-leaf (1.3) stage to a healthy crop. However, in some situations, it may be necessary to apply the composition at a later stage when the weeds themselves are actually present.

The crops preferably need to be growing in good soil conditions, i.e. no compaction of soil, and no significantly stony soils, in order that they may establish a healthy root system with good root growth.

Phenmedipham may be used alone in the protection of oilseed rape crops, or alternatively may be used in combination with one or more further herbicides. Examples of such further herbicides include ethofumesate, desmedipham, ethametsulfuron methyl, clopyralid, picloram, metazachlor, and combinations thereof.

When more than one further herbicides are combined with phenmedipham, these further herbicides are preferably mixtures of ethofumesate and desmedipham, clopyralid and picloram (clopyralid and picloram mixtures being marketed by Dow under the trade name Galera), ethofumesate and ethametsulfuron methyl, quinmerac and metazachlor, dimethenamid P and metazachlor, or a mixture of ethofumesate, clopyralid and picloram.

Typical phenmedipham formulations used in the present invention include 114 g/l EC, 320 g/l SC and 471 g/l SC (EC = Emulsifiable Concentrate, SC = Suspension Concentrate), preferably 114 g/l EC.

Preferably, the composition is applied to the oilseed rape such that an amount of phenmedipham of up to about 400 g/ha is applied. When phenmedipham is employed in combination with a further herbicide, about 150 g/ha of phenmedipham and about 500 g/ha of the further herbicide (e.g. metazclor) is preferably applied. Concentrations as low as 90 grams/ha have been found to be effective. Hence, preferably at least 90 grams/ha of phenmedipham is used.

Optionally, the compositions used in the invention can also comprise one or more adjuvants. These can be any adjuvants which are authorised for use in herbicidal formulations, but are preferably selected from oil based adjuvants and mixtures, organosilicone based adjuvants and mixtures, non-ionic based adjuvants and mixtures, polymeric based adjuvants and mixtures, and fatty acid based adjuvants and mixtures, and combinations thereof. Preferably, mineral oil is added as an adjuvant.

In its protection of the oilseed rape crops, the phenmedipham-containing composition is used to control or inhibit the growth of weeds, and also to kill the weeds. Preferred target weeds are volunteer borage, common field speedwell, field pansy, groundsel, cranesbill in mixtures, and chickweed. For these weeds, there are only a very limited number of post-emergence herbicides which are active against them in early season and approved for use with regard to environmental considerations. The invention is therefore very important for the control and inhibition of these weeds.

To date, there is no known post emergence herbicide which is active against volunteer borage. Other herbicides are not active against Borage, and employ a different mode of action to phenmedipham. In the present invention, it is preferable to have a relatively quick contact weed kill in order to minimise any impact on the crop growth.

Also provided in accordance with the present invention is a composition comprising phenmedipham and one or more further herbicides which are preferably selected from ethametsulfuron methyl, clopyralid, picloram, metazachlor, and combinations thereof.

When more than one further herbicides are combined with phenmedipham, these further herbicides are preferably mixtures of clopyralid and picloram (clopyralid and picloram mixtures being marketed by The Dow Chemical Company under the trade name Galera), ethofumesate and ethametsulfuron methyl, quinmerac and metazachlor, dimethenamid P and metazachlor, or a mixture of ethofumesate, clopyralid and picloram.

Optionally, the compositions used in the invention can also comprise one or more adjuvants. These can be any adjuvants which are authorised for use in herbicidal formulations, but are preferably selected from oil based adjuvants and mixtures, organosilicone based adjuvants and mixtures, non-ionic based adjuvants and mixtures, polymeric based adjuvants and mixtures, and fatty acid based adjuvants and mixtures, and combinations thereof.

Preferably, the composition comprises between about 50 to about 500 g/l of phenmedipham. Preferred compositions include EC formulations having 114 g/l of phenmedipham, or SC formulations having concentration rates of 320 g/l or 471 g/l of phenmedipham.

Also in accordance with the present invention is provided a method of controlling or inhibiting the growth of weeds and of killing weeds associated with oil seed rape crops comprising applying a herbicidally effective amount of phenmedipham alone or a composition containing phenmedipham and one or more further herbicides as described above.

The invention will now be further explained by reference to the following examples, which are intended to be illustrative only, and in no way limiting upon the scope of the invention.

**Examples**

The activity of phenmedipham on the control and inhibition of the growth of weeds associated with oilseed rape was investigated over the period 2003-2006.

*Materials and Method*

All trials carried out were of a small plot with a randomised block design. Generally, plot size was around 20m$^2$ replicated 3-4 times.

The trials were conducted in commercial fields with known weed problems. Each plot was marked with canes and measures to ensure no overspray from the grower.

All applications were made using a hand held boom. The chemical was applied in an application volume of 100 l/ha.

Assessments of crop selectivity were carried out using the accepted crop visual score and weed control carried out by either quadrant counts or a visual assessment of overall control per plot.

*STANDARD OPERATING PROCEDURES*

1.0 The Standard Operating Procedures describe the equipment most commonly used for application of the test material, its calibration and general maintenance.

2.0 <u>REQUIREMENT</u>

2.1 <u>Knapsack Sprayers</u>

Where a knapsack sprayer is used to apply the treatment to the required crop, the propellant source (e.g. $CO_2$/ compressed air) is attached to a vessel containing the appropriate treatment. This pressurises the vessel so that when the valves are opened, the spray is forced out of the bottle and through the boom.

The gas bottle is attached to a regulator to control the amount of gas entering the vessel and the pressure is monitored by a gauge attached to the handle of the sprayer.

Each boom is individually numbered.

2.1.1 <u>Nozzles and Filters</u>

The number of nozzles present on the boom are either 4 (2m swath) or 6 (3m swath) at 50 cm spacing or 5 (2m swath) at 40cm spacing.

Low Drift 110° flat fan tips are most commonly used. Occasionally other nozzle types may be used for specialised purposes.

2.1.2 <u>Calibration</u>

The output required from each nozzle per minute is calculated using a typical formula such as:

$$\text{Output (l/min)} = \frac{\text{spray vol (l/ha) x forward speed (km/h) x nozzle spacing (m)}}{600}$$

for example if spray volume = 200 l/ha
forward speed = 3.6 km/h (=1 m/sec)
nozzle spacing = 0.5 m

$$\text{output required} = \frac{200 \times 3.6 \times 0.5}{600}$$

$$= 0.6 \text{ l/min}$$

Once the required output is determined the boom can then be calibrated. This is done by measuring the output from each nozzle at a specified pressure over a given period of time. The pressure can then be adjusted to give the required output within a 5% tolerance. A check for satisfactory atomisation is also made at this point and any errant nozzles are replaced and the calibration procedure repeated.

If the correct output cannot be achieved within the manufacturers specified pressure range, smaller or larger nozzles will be fitted and the process repeated.

The calibration procedure is carried out at least before commencement of spray season i.e. Autumn and Spring and as soon as possible after any nozzles need to be replaced in the field.

### 2.1.3 Maintenance

When spraying is finished the canisters and the spray boom are thoroughly cleaned using water and All Clear® Extra. If a pesticide is sprayed that requires a specific cleaner then this cleaner will be used.

### 2.2 Granule application

Granule applications are normally made by the use of a Pepperpot.

### 2.3 Seed Treatment

Seed is normally provided pre-treated by an Officially Recognised Efficacy Testing Facility or Organisation.

Tables 1-5 below detail the data obtained from applying compositions comprising phenmedipham onto crops to control the growth of volunteer borage, speedwell, field pansy, groundsel, cranesbill and chickweed over a number of years, 2003-2006.

## a) Small Plot Replicated Trials

There were three small plot trial series:

Trial Series 1 (2006)
Trials Series 2 (2006)
Trial Series 3 (2006)
Trial Series 4 (2005)

## b) Grower Applied Trials

In addition to the small plot replicated trials, two "grower applied" trials were carried out. These consisted of applications on a "whole field scale" via a normal, tractor applied, farm sprayer.
Trials were conducted in autumn 2005 and autumn 2006. In both years the target species for control was volunteer borage.
The application volume was 100 l/ha and phenmedipham was applied as Beetup EC (114 grams/litre) at 3.5 l/ha. The crop stage at application was 4-5 leaves.
Whole field visible assessments were conducted for crop safety and volunteer borage control.

## Results

## Small Plot Trials

## Trial series 1

## Crop Selectivity

Table 1

| Treatment | Rate l/ha formulated | Site Date Timing Code | Woodhall Spa 30/10/2006 | Castle Bytham 02/11/2006 | Southorpe |
| --- | --- | --- | --- | --- | --- |
| | | | Crop Biomass | Crop Biomass | Crop Biomass |
| Untreated | | | 100 | 100 | 100 |
| Beetup EC 114 | 3.50 | A | 100 | 100 | 100 |

## Weed Control

Table 2

**Early Assessments of Weed Control**

| Treatment | Rate l/ha or kg/ha formulated | Timing Code | % Weed Control Weed Species CF Speedwell | Pansy |
|---|---|---|---|---|
| 1 | | | | |
| 2 Beetup EC 114 | 3.50 | A | 93 | 80 |

At three sites phenmedipham proved to be crop safe. Excellent control of field speedwell and field pansy was observed.

**Trial Series 2**

**Crop Selectivity and weed Control**

Table 3

| Treatment | Rate | App Volume | Timing | Crop Biomass | Groundsel | S. Thistle | CF Speedwell |
|---|---|---|---|---|---|---|---|
| Beetup EC 114 | 3.50 | 100 | B | 91 | 85 | 78 | 93 |

This also shows an excellent control of speedwell. Any initial biomass reduction would not be expected to last into the season.

**Trial Series 3**

Table 4

| | | | Crop Biomass | % Control CF speedwell |
|---|---|---|---|---|
| Untreated | | | 100 | |
| Beetup EC 114 | 3.50 | B | 95 | 92 |

Slight depression in initial biomass but again excellent control of speedwell. The initial biomass reduction is not expected to last into the season.

**Trial Series 4**

Table 5

| T1 | T2 | Volume/ha | Crane's bill Plant Count per plot 12/04/2006 | Crane's bill % Control 12/04/2006 | Chickweed % Control 12/04/2006 |
|---|---|---|---|---|---|
| Untreated | | | 23 | 23 plants/plot | 7 plants/plot |
| Fox 1.0 | | 200 | 21 | 7.4 | 70 |
| Fortrol 1.0 | | 100 | 24 | 0 | 80 |
| Fortrol 1.0 | | 200 | 23 | 0 | 85 |
| | Fox 1.0 + Galera 0.2 | 200 | 6 | 75 | 20 |
| | Galera 0.35 | 200 | 14 | 36.4 | 76.8 |

(continued)

| T1 | T2 | Volume/ha | Crane's bill Plant Count per plot 12/04/2006 | Crane's bill % Control 12/04/2006 | Chickweed % Control 12/04/2006 |
|---|---|---|---|---|---|
| Fox 0.75 + Fortrol 0.5 | | 200 | 13 | 42.6 | 85 |
| | Fox 0.75 + Fortrol 0.5 | 200 | 15 | 35.3 | 100 |
| Beetup 3.57 | | 100 | 10 | 54.4 | 80 |

This trial was conducted in autumn 2004. Beetup 3.5 l/ha comfortably outperformed the standard treatment of Fox 1.0 l/ha on cranesbill. It also comfortably outperformed the other approved standard Fortrol on cranesbill. In any case, however, Fortrol is being withdrawn from use.

Against chickweed, Beetup outperformed Fox and was only beaten by Fortrol-containing mixes. However, as mentioned above, Fortrol is being withdrawn from use. Phenmedipham-containing herbicides are therefore as good or better than existing standard treatments, and, in contrast to the other comparable herbicides, are environmentally acceptable. Fox contains bifenox and is sold by Makhteshim Agin Ltd (UK). Fortrol contains cyanazine and is sold by BASF.

**Grower Trials**

Some small amounts of crop yellowing occurred which was quickly outgrown.

Control of volunteer borage was excellent. In 2005 the borage was competing with the crop so the results were particularly good.

In 2006 good control of volunteer borage was achieved.

The above results demonstrate that:

- Phenmedipham shows good crop selectivity when used on the crop after the four-leaf stage. It also exhibits excellent control of volunteer borage, common field speedwell, field pansy, cranesbill and chickweed.

With the demise of Fortrol as a viable herbicide, there will be a need for effective post-emergence active herbicides for the control and inhibition of these weeds. These results show that phenmedipham is as good or better, and can therefore be the active ingredient in such herbicides.

**Chickweed**

Phenmedipham was found to be effective against chickweed in concentrations as low as 90 grams active ingredient/ha. The addition of mineral oil to the formulation improved the effect of the formulation of lower concentrations.

Table 6

| Trt No* | Chickweed 2- 4 lv | Chickweed 4-6 leaf | % damage at 7 days | | % damage at 14 days | | % damage at 21 days | | Fresh wt (g) at 21 days | | % control calculated from weights | |
|---|---|---|---|---|---|---|---|---|---|---|---|---|
| 1 | Untreated | | 0 | g | 0 | g | 0 | f | 25 | a | -3 | f |
| | Untreated | | 0 | g | 0 | g | 0 | f | 24 | a | 3 | f |
| 2 | PMP SC 90 grams ai/ha | | 40 | d | 60 | d | 55 | cd | 9 | de | 64 | c |
| 3 | PMP SC 180 grams ai/ha | | 51 | bc | 71 | c | 68 | b | 5 | f | 78 | b |
| 4 | PMP SC 360 grams ai/ha | | 80 | a | 90 | a | 90 | a | 1 | g | 95 | a |

(continued)

| Trt No* | Chickweed 2-4 lv | Chickweed 4-6 leaf | % damage at 7 days | | % damage at 14 days | | % damage at 21 days | | Fresh wt (g) at 21 days | | % control calculated from weights | |
|---|---|---|---|---|---|---|---|---|---|---|---|---|
| 5 | PMP SC 90 grams ai/ha + Mineral Oil 1.0 | | 54 | bc | 74 | bc | 66 | bc | 6 | ef | 75 | b |
| 6 | PMP SC 180 grams ai/ha + Mineral Oil 1.0 | | 48 | cd | 78 | bc | 74 | b | 5 | f | 81 | b |
| 7 | PMP SC 360 grams ai/ha + Mineral Oil 1.0 | | 59 | b | 83 | ab | 78 | b | 4 | f | 84 | b |
| 8 | | PMP SC 90 grams ai/ha | 1 | fg | 3 | g | 0 | f | 25 | a | -5 | f |
| 9 | | PMP SC 180 grams ai/ha | 4 | fg | 15 | f | 8 | ef | 17 | b | 30 | e |
| 10 | | PMP SC 360 grams ai/ha | 14 | e | 54 | d | 49 | d | 10 | d | 61 | c |
| 11 | | PMP SC 90 grams ai/ha + Mineral Oil 1.0 | 1 | fg | 28 | e | 15 | e | 18 | b | 28 | e |
| 12 | | PMP SC 180 grams ai/ha + Mineral Oil 1.0 | 9 | ef | 35 | e | 19 | e | 14 | C | 42 | d |
| 13 | | PMP SC 360 grams ai/ha + Mineral Oil 1.0 | 15 | e | 56 | d | 46 | d | 9 | De | 65 | c |

*Trt No: Treatment Number
PMP = phenmedipham.

## Claims

1. Use of a composition comprising phenmedipham as a herbicide in the protection of oilseed rape, wherein the composition is applied to the oilseed rape not before the oilseed rape has reached growth stage 1.2 and an amount of phenmedipham of up to about 400 g/ha is applied.

2. Use according to claim 1, wherein the oilseed rape crop is winter and spring oilseed rape.

3. Use according to any preceding claim wherein the composition is applied no later than when the crop canopy closes.

4. Use according to claim 1, wherein the composition is applied to the oilseed rape such that an amount of phenmedipham of up to about 150 g/ha is applied.

5. Use according to any preceding claim, wherein the composition is an emulsifiable concentrate formulation having 114 g/l of phenmedipham, or suspension concentrate formulations having concentration rates of 320 g/l or 471 g/l of phenmedipham.

6. Use according to any preceding claim, wherein the composition further comprises one or more further herbicides selected from ethofumesate, desmedipham, ethametsulfuron methyl, clopyralid, picloram, metazachlor, and combinations thereof.

7. Use according to claim 6, wherein the further herbicide is ethofumesate or desmedipham.

8. Use according to any of claims 4-7, wherein the composition is applied to the oilseed rape such that an amount of phenmedipham of up to about 150 g/ha is applied and about 500 g/ha of the one or more further herbicides is applied.

9. Use according to claim 7, wherein when more than one further herbicides are combined with phenmedipham, these further herbicides are selected from mixtures of clopyralid and picloram, ethofumesate and desmedipham, ethofumesate and ethametsulfuron methyl, quinmerac and metazachlor, dimethenamid P and metazachlor, or a mixture of ethofumesate, clopyralid and picloram.

10. Use according to any preceding claim, wherein the composition further comprises one or more adjuvants.

11. Use according to claim 10, wherein the one or more adjuvants are selected from oil based adjuvants and mixtures, organosilicone based adjuvants and mixtures, non-ionic based adjuvants and mixtures, polymeric based adjuvants and mixtures, and fatty acid based adjuvants and mixtures.

12. Use according to any preceding claim, wherein the composition is used to control or inhibit the growth of and/or kill weeds, preferably, wherein the weed is selected from one or more of volunteer borage, common field speedwell, field pansy, groundsel, cranesbill and/or chickweed.

13. A method of controlling or inhibiting the growth of and/or killing weeds associated with oilseed rape crops comprising applying a herbicidally effective amount of phenmedipham alone, or a composition comprising phenmedipham and one more further herbicide selected from ethofumesate, desmedipham, ethametsulfuron methyl, clopyralid, picloram, metazachlor, and combinations thereof, up to 400g/ha phenmedipham, but not before the oilseed rape had reached growth stage 1.2.

**Patentansprüche**

1. Verwendung einer Zusammensetzung, die Phenmedipham umfasst, als Herbizid beim Schutz von Ölsaatraps, wobei die Zusammensetzung nicht auf den Ölsaatraps aufgebracht wird, bevor der Ölsaatraps Wachstumsstufe 1.2 erreicht hat, und eine Menge an Phenmedipham von bis zu etwa 400 g/ha aufgebracht wird.

2. Verwendung nach Anspruch 1, bei der die Ölsaatrapspflanze Winter- und Frühlingsölsaatraps ist.

3. Verwendung nach einem der vorhergehenden Ansprüche, bei der die Zusammensetzung nicht später aufgebracht wird, als sich die Pflanzendecke schließt.

4. Verwendung nach Anspruch 1, bei der die Zusammensetzung auf den Ölsaatraps so aufgebracht wird, dass eine Menge an Phenmedipham von bis zu etwa 150 g/ha aufgebracht wird.

5. Verwendung nach einem der vorhergehenden Ansprüche, bei der die Zusammensetzung eine emulgierbare Konzentratformulierung mit 114 g/l Phenmedipham ist, oder Suspensionskonzentratformulierungen mit Konzentrationsmengen von 320 g/l oder 471 g/l an Phenmedipham.

6. Verwendung nach einem der vorhergehenden Ansprüche, bei der die Zusammensetzung ferner ein oder mehrere weitere Herbizide ausgewählt aus Ethofumesat, Desmedipham, Ethametsulfuronmethyl, Clopyralid, Picloram, Metazachlor und Kombinationen davon umfasst.

7. Verwendung nach Anspruch 6, bei der das weitere Herbizid Ethofumesat oder Desmedipham ist.

8. Verwendung nach einem der Ansprüche 4 bis 7, bei der die Zusammensetzung auf den Ölsaatraps so aufgebracht wird, dass eine Menge an Phenmedipham von bis zu etwa 150 g/ha aufgebracht wird und etwa 500 g/ha des einen oder der mehreren weiteren Herbizide aufgebracht wird.

9. Verwendung nach Anspruch 7, bei der, wenn mehr als ein weiteres Herbizid mit Phenmedipham kombiniert wird, diese weiteren Herbizide ausgewählt sind aus Mischungen von Clopyralid und Picloram, Ethofumesat und Desmedipham, Ethofumesat und Ethametsulfuronmethyl, Quinmerac und Metazachlor, Dimethenamid P und Metazachlor, oder einer Mischung von Ethofumesat, Clopyralid und Picloram.

10. Verwendung nach einem der vorhergehenden Ansprüche, bei der die Zusammensetzung ferner ein oder mehrere Zusatzstoffe umfasst.

11. Verwendung nach Anspruch 10, wobei die ein oder mehreren Zusatzstoffe ausgewählt ist oder sind aus Zusatzstoffen auf Ölbasis und Mischungen, Zusatzstoffen auf Organosilikonbasis und Mischungen, Zusatzstoffen auf nicht-ionischer Basis und Mischungen, Zusatzstoffen auf Polymerbasis und Mischungen und Zusatzstoffen auf Fettsäurebasis und Mischungen.

12. Verwendung nach einem der vorhergehenden Ansprüche, bei der die Zusammensetzung verwendet wird, um das Wachstum von Unkraut zu kontrollieren oder zu bekämpfen und/oder Unkraut abzutöten, wobei das Unkraut vorzugsweise ausgewählt ist aus ein oder mehreren von Borretsch, Gemeiner Feldlattich, Acker-Stiefmütterchen, Kreuzkraut, Storchschnabel und/oder Hornkraut.

13. Verfahren zur Kontrolle oder Bekämpfung des Wachstums von Unkraut und/oder zur Abtötung von Unkraut, dass zusammen mit Ölsaatrapspflanzen vorkommt, bei dem eine herbizid wirksame Menge nur von Phenmedipham oder einer Zusammensetzung, die Phenmedipham und ein oder mehrere weitere Herbizide ausgewählt aus Ethofumesat, Desmedipham, Ethametsulfuronmethyl, Clopyralid, Picloram, Metazachlor und Kombinationen davon umfasst, bis zu 400 g/ha Phenmedipham aufgebracht wird, jedoch nicht bevor der Ölsaatraps die Wachstumsstufe 1.2 erreicht hat.

**Revendications**

1. Utilisation d'une composition comprenant du phenmédipham comme herbicide pour la protection du colza oléagineux, dans laquelle la composition n'est pas appliquée au colza oléagineux avant que le colza oléagineux ait atteint le stade de croissance 1,2 et une quantité de phenmédipham pouvant aller jusqu'à environ 400 g/ha est appliquée.

2. Utilisation selon la revendication 1, dans laquelle la culture de colza oléagineux est le colza oléagineux d'hiver et de printemps.

3. Utilisation selon l'une quelconque des revendications précédentes, dans laquelle la composition est appliquée au plus tard lorsque le couvert de la culture est fermé.

4. Utilisation selon la revendication 1, dans laquelle la composition est appliquée au colza oléagineux de telle sorte qu'une quantité de phenmédipham pouvant aller jusqu'à environ 150 g/ha est appliquée.

5. Utilisation selon l'une quelconque des revendications précédentes, dans laquelle la composition est une formulation de concentré émulsionnable contenant 114 g/l de phenmédipham ou des formulations de concentré en suspension ayant des taux de concentration de 320 g/l ou 471 g/l de phenmédipham.

6. Utilisation selon l'une quelconque des revendications précédentes, dans laquelle la composition comprend en outre un ou plusieurs autres herbicides choisis parmi l'éthofumesate, le desmédipham, l'éthametsulfuron méthyle, le clopyralide, le picloram, le métazachlor et des combinaisons de ceux-ci.

7. Utilisation selon la revendication 6, dans laquelle l'autre herbicide est l'éthofumesate ou le desmédipham.

8. Utilisation selon l'une quelconque des revendications 4 à 7, dans laquelle la composition est appliquée au colza oléagineux de telle sorte qu'une quantité de phenmédipham pouvant aller jusqu'à environ 150 g/ha est appliquée et qu'une quantité d'environ 500 g/ha de l'un ou des autres herbicides est appliquée.

9. Utilisation selon la revendication 7, dans laquelle lorsque plusieurs autres herbicides sont combinés au phenmédipham, ces autres herbicides sont choisis parmi les mélanges de clopyralide et de picloram, d'éthofumesate et de desmédipham, d'éthofumesate et d'éthametsulfuron méthyle, de quinmérac et de métazachlor, de diméthénamide P et de métazachlor ou un mélange d'éthofumesate, de clopyralide et de picloram.

10. Utilisation selon l'une quelconque des revendications précédentes, dans laquelle la composition comprend en outre un ou plusieurs adjuvants.

11. Utilisation selon la revendication 10, dans laquelle le ou les adjuvants sont choisis parmi des adjuvants et mélanges à base d'huile, des adjuvants et mélanges à base d'organosilicone, des adjuvants et mélanges à base non ionique, des adjuvants et mélanges à base de polymères et des adjuvants et mélanges à base d'acide gras.

12. Utilisation selon l'une quelconque des revendications précédentes, dans laquelle la composition est utilisée pour contrôler ou inhiber la croissance des mauvaises herbes et/ou les tuer, de préférence, dans laquelle la mauvaise herbe est choisie parmi un ou plusieurs de la bourrache spontanée, la véronique ordinaire, la pensée des champs, le séneçon, le géranium et/ou le mouron des oiseaux.

13. Procédé consistant à contrôler ou inhiber la croissance des mauvaises herbes associées aux cultures de colza oléagineux ou à les tuer consistant à appliquer une quantité efficace de manière herbicidale de phenmédipham seul ou une composition comprenant le phenmédipham et un autre herbicide supplémentaire choisi parmi éthofumesate, desmédipham, éthametsulfuron méthyle, clopyralide, picloram, métazachlor et des combinaisons de ceux-ci, pouvant aller jusqu'à 400 g/ha de phenmédipham, mais pas avant que le colza oléagineux ait atteint le stade de croissance 1,2.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2263449